# EUROPEAN PATENT APPLICATION

(11) **EP 4 789 937 A1**
(43) Date of publication of application: **12.08.2026**
(21) Application number: 25224105.4
(22) Date of filing: 16.12.2025
(51) Int. Cl.: B60W 30/09, B60W 30/095, B60W 30/18

(54) **VEHICLE CONTROL APPARATUS**

(30) Priority: 05.02.2025 JP 2025017682
(71) Applicant: TOYOTA JIDOSHA KABUSHIKI KAISHA, Toyota-Shi, Aichi-Ken 471-8571 (JP)
(72) Inventor: OKAMOTO, Kazuya, TOYOTA-SHI, AICHI, 471-8571 (JP)
(74) Representative: Cabinet Beau de Loménie

(57) **Abstract**

A vehicle control apparatus (10) executes a collision risk reduction control to reduce a collision risk when a collision condition is satisfied. The collision condition is based on a relative relationship between a host vehicle (100) and an object (200) ahead of the host vehicle (100) and is satisfied when there is a collision risk that the host vehicle (100) collides with the object (200). The vehicle control apparatus (10) performs a change process to change the collision condition such that the collision condition is made difficult to be satisfied when a first condition and a second condition are satisfied. The first condition is a condition that the object (200) exists in an adjacent lane. The second condition is a condition that a length of the object (200) in a traveling direction of the host vehicle (100) is equal to or greater than a predetermined length.

## Description

### BACKGROUND

### Field

The present invention relates to a vehicle control apparatus.

### Description of the related art

There is known a vehicle control apparatus which executes a collision risk reduction control to reduce a collision risk that a host vehicle collides with a pedestrian crossing a road (for example, refer to Japanese Unexamined Patent Publication No. 2015-24713).

Meanwhile, the host vehicle may overtake a long object such as a large-sized vehicle existing in a lane adjacent to a lane in which the host vehicle is traveling. At this time, accuracy of acquiring a relative relationship between the object and the host vehicle may be reduced. In this case, although there is no collision risk that the host vehicle collides with the object, it may be determined that there is the collision risk. In this case, the collision risk reduction control may be unnecessarily executed.

### SUMMARY

An object of the present invention is to provide a vehicle control apparatus capable of avoiding unnecessary execution of the collision risk reduction control in a situation where the host vehicle overtakes a large-sized vehicle.

A vehicle control apparatus according to the present invention comprises an electronic control unit configured to execute a collision risk reduction control to reduce a collision risk when a collision condition is satisfied. The collision condition is a condition based on a relative relationship between a host vehicle and a target object ahead of the host vehicle and is satisfied when there is a collision risk that the host vehicle collides with the target object. The electronic control unit is configured to perform a change process to change the collision condition such that the collision condition is made difficult to be satisfied when a first condition and a second condition are satisfied. The first condition is a condition that the target object exists in a lane adjacent to a lane in which the host vehicle is traveling. The second condition is a condition that a length of the target object in a traveling direction of the host vehicle is equal to or greater than a predetermined length.

When overtaking a long target object in a traveling direction of the host vehicle, accuracy of acquiring a relative relationship between the target object and the host vehicle may be reduced. In this case, although there is no collision risk that the host vehicle collides with the target object, it may be determined that the collision condition is satisfied. In this case, the collision risk reduction control may be unnecessarily executed. According to the present invention, when the target object exists in a lane adjacent to a lane in which the host vehicle is traveling, and a length of the target object in the traveling direction of the host vehicle is equal to or longer than a predetermined length, the collision condition is made difficult to be satisfied. Therefore, in a situation where the host vehicle overtakes a long target object, the unnecessary execution of the collision risk reduction control can be avoided.

In the vehicle control apparatus according to an aspect of the present invention, the collision condition may include a condition that an overlap ratio between the target object and the host vehicle is equal to or greater than a predetermined overlap ratio threshold. The change process may be a process of increasing the predetermined overlap ratio threshold.

According to this aspect of the present invention, by means of increasing the predetermined overlap ratio threshold, it is possible to change the collision condition to a condition which is difficult to be satisfied.

Further, in the vehicle control apparatus according to another aspect of the present invention, the collision condition may include a condition that an overlap ratio between the target object and the host vehicle is equal to or greater than a predetermined overlap ratio threshold. The change process may be a process of increasing the predetermined overlap ratio threshold as the length of the target object is longer.

According to this aspect of the present invention, by means of increasing the predetermined overlap ratio threshold, it is possible to change the collision condition to a condition which is difficult to be satisfied.

Further, in the vehicle control apparatus according to further another aspect of the present invention, the target object may be another vehicle traveling in a lane adjacent to the lane in which the host vehicle is traveling in the same traveling direction as the traveling direction of the host vehicle.

According to this aspect of the present invention, for another vehicle traveling in the same direction as a traveling direction of the host vehicle in a lane adjacent to a lane in which the host vehicle is traveling, it is possible to avoid unnecessary execution of the collision risk reduction control.

Constituent elements of the present invention are not limited to embodiments of the present invention described later with reference to the drawings. Other objects, other features, and accompanying advantages of the present invention will be readily understood from the description of embodiments of the present invention.

### BRIEF DESCRIPTION OF THE DRAWINGS

FIG. 1 is a diagram showing a vehicle control apparatus according to an embodiment of the present invention.
FIG. 2 is a diagram showing a preceding vehicle and an adjacent vehicle.
FIG. 3 is a flowchart showing a routine executed by the vehicle control apparatus according to the embodiment of the present invention.

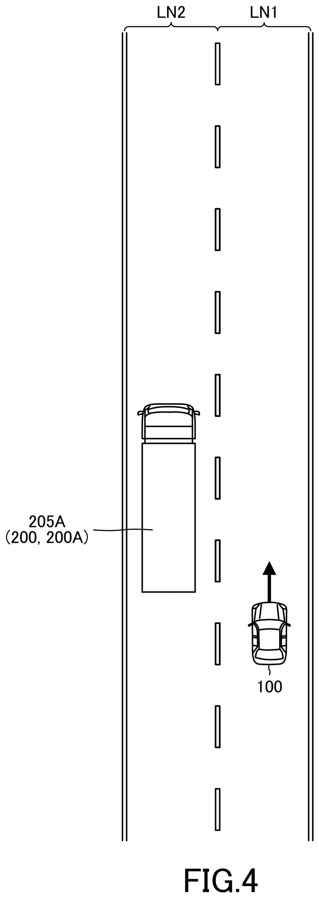

FIG. 4 is a diagram showing a large-sized vehicle.
FIG. 5 is a diagram illustrating an overlap ratio.

### DETAILED DESCRIPTION

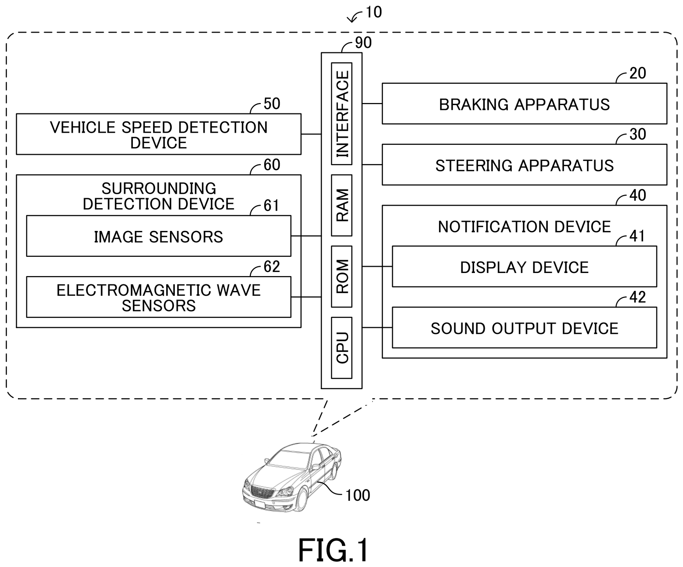

Hereinafter, the vehicle control apparatus according to the embodiment of the present invention will be described with reference to the drawings. In FIG. 1, the vehicle control apparatus 10 according to the embodiment of the present invention is shown. The vehicle control apparatus 10 is mounted on a host vehicle 100. Hereinafter, the vehicle control apparatus 10 will be described taking as an example a case where an operator of the host vehicle 100 is a driver of the host vehicle 100 (that is, a person who rides in the host vehicle 100 and drives the host vehicle 100). However, the operator of the host vehicle 100 may be a remote operator of the host vehicle 100 (that is, a person who remotely drives the host vehicle 100 without riding in the host vehicle 100).

As shown in FIG. 1, the vehicle control apparatus 10 includes an ECU (electronic control unit) 90 as a control device. The ECU 90 includes a microcomputer as a main part. The microcomputer includes a CPU, a computer-readable storage medium, an interface, etc. The storage medium includes ROM, RAM, nonvolatile memory, etc. The CPU realizes various functions by executing instructions or programs or routines stored in the storage medium. In particular, in this embodiment, the vehicle control apparatus 10 stores in the storage medium programs for realizing various controls executed by the vehicle control apparatus 10.

It should be noted that, in this embodiment, the vehicle control apparatus 10 includes only one ECU 90, but may include a plurality of ECUs and be configured to share functions of the vehicle control apparatus 10 described below among the respective ECUs.

Further, the vehicle control apparatus 10 may be configured to be able to update (upgrade) the programs stored in the storage medium by wireless communication (for example, Internet communication) with external devices.

It should be noted that the vehicle control apparatus 10 is applied not only to a vehicle that is traveled by manual driving by an operator but also to a vehicle that is traveled by automatic driving.

As shown in FIG. 1, the host vehicle 100 is mounted with a braking apparatus 20, a steering apparatus 30, a notification device 40, a vehicle speed detection device 50, and a surrounding detection device 60.

The braking apparatus 20 applies a braking force to the host vehicle 100 (in particular, wheels of the host vehicle 100). The braking apparatus 20 includes, for example, a hydraulic brake apparatus. The braking apparatus 20 is electrically connected to the ECU 90. The vehicle control apparatus 10 controls the braking force applied to the host vehicle 100 by controlling an operation of the braking apparatus 20.

The steering apparatus 30 applies a steering force for steering the host vehicle 100 to the host vehicle 100. The steering apparatus 30 is electrically connected to the ECU 90. The vehicle control apparatus 10 steers the host vehicle 100 by controlling an operation of the steering apparatus 30.

The notification device 40 performs various notifications to the driver. In this embodiment, the notification device 40 includes a display device 41 and a sound output device 42.

The display device 41 displays various images. The display device 41 includes, for example, a display. The display device 41 is electrically connected to the ECU 90. The vehicle control apparatus 10 displays various images by the display device 41.

The sound output device 42 outputs various sounds and/or voices. The sound output device 42 includes, for example, a speaker. The sound output device 42 is electrically connected to the ECU 90. The vehicle control apparatus 10 outputs various sounds and/or voices by the sound output device 42.

The vehicle speed detection device 50 detects a host vehicle speed V1. The host vehicle speed V1 is a traveling speed of the host vehicle 100. The vehicle speed detection device 50 includes, for example, wheel rotation speed sensors provided on respective wheels of the host vehicle 100. The vehicle speed detection device 50 is electrically connected to the ECU 90. The vehicle control apparatus 10 acquires the host vehicle speed V1 by the vehicle speed detection device 50.

The surrounding detection device 60 detects information on the surroundings of the host vehicle 100. In this embodiment, the surrounding detection device 60 includes a plurality of image sensors 61 and a plurality of electromagnetic wave sensors 62. The image sensors 61 and the electromagnetic wave sensors 62 are electrically connected to the ECU 90.

The image sensor 61 is, for example, a camera sensor. The vehicle control apparatus 10 acquires information on a situation of the surroundings of the host vehicle 100 as image information IC by the image sensor 61.

Further, the electromagnetic wave sensor 62 is, for example, a radar sensor such as a millimeter wave radar. The vehicle control apparatus 10 acquires information on objects existing in the surroundings of the host vehicle 100 as object information IO by the electromagnetic wave sensor 62.

Then, the surrounding detection device 60 acquires information on the surroundings of the host vehicle 100 as surrounding information IS by performing fusion processing of the image information IC and the object information IO by a known method. However, the vehicle control apparatus 10 may be configured to acquire only the image information IC as the surrounding information IS, or may be configured to acquire only the object information IO as the surrounding information IS.

### <Operation of Vehicle Control Apparatus>

Next, the operation of the vehicle control apparatus 10 will be described.

The vehicle control apparatus 10 executes a collision risk reduction control to reduce a collision risk when there is a collision risk that the host vehicle 100 collides with a target object ahead of the host vehicle 100. The target object is detected based on the surrounding information IS.

The target object exists ahead of the host vehicle 100. In particular, the target object is another vehicle traveling ahead of the host vehicle 100. In this embodiment, the target object is a preceding vehicle 200P and an adjacent vehicle 200A. Therefore, in this embodiment, the vehicle control apparatus 10 is configured to execute the collision risk reduction control when there is a collision risk that the host vehicle 100 collides with the preceding vehicle 200P. Further, the vehicle control apparatus 10 is configured to execute the collision risk reduction control when there is a collision risk that the host vehicle 100 collides with the adjacent vehicle 200A entering into a host vehicle traveling lane LN1.

The collision risk reduction control includes an alarm control to make an alarm to the driver of the host vehicle 100, and/or an automatic braking control to brake the host vehicle 100 by autonomously applying the braking force to the host vehicle 100 and to stop the host vehicle 100 before the target object (for example, the preceding vehicle 200P or the adjacent vehicle 200A entering the host vehicle traveling lane LN1). The vehicle control apparatus 10 makes an alarm by the notification device 40. More specifically, the vehicle control apparatus 10 makes an alarm by displaying an alarm image by the display device 41. Alternatively, the vehicle control apparatus 10 makes an alarm by emitting an alarm sound from the sound output device 42. It should be noted that, as long as the collision risk reduction control reduces a collision risk between the host vehicle 100 and the target object, the collision risk reduction control may be a control other than the above-mentioned alarm control or the above-mentioned automatic braking control.

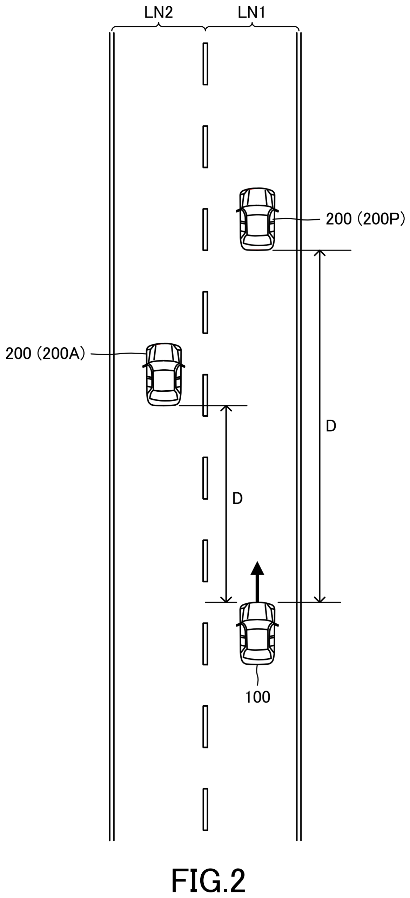

It should be noted that, as shown in FIG. 2, the preceding vehicle 200P is another vehicle traveling in the host vehicle traveling lane LN1 within a predetermined distance Dth ahead of the host vehicle 100. The host vehicle traveling lane LN1 is a lane in which the host vehicle 100 is traveling. Further, as shown in FIG. 2, the adjacent vehicle 200A is another vehicle existing in an adjacent lane LN2 adjacent to the host vehicle traveling lane LN1. More specifically, the adjacent vehicle 200A is another vehicle traveling in the adjacent lane LN2 in the same traveling direction (that is, moving direction) as the traveling direction of the host vehicle 100.

In this embodiment, since the target object is particularly the preceding vehicle 200P or the adjacent vehicle 200A, hereinafter, the operation of the vehicle control apparatus 10 will be described taking as an example a case where the target object is the preceding vehicle 200P or the adjacent vehicle 200A.

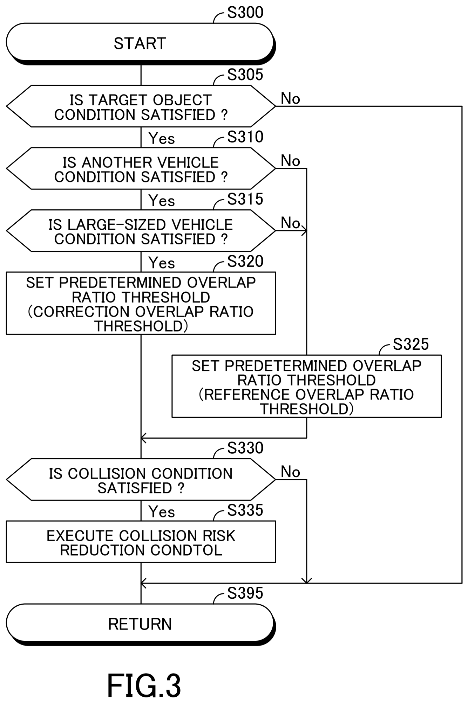

The vehicle control apparatus 10 executes the routine shown in FIG. 3 at predetermined time intervals, thereby executing the collision risk reduction control when predetermined conditions are satisfied. Therefore, at a predetermined timing, the vehicle control apparatus 10 starts the process from a step S300 of the routine shown in FIG. 3. Then, the vehicle control apparatus 10 proceeds with the process to a step S305 to determine whether or not a target object condition C1 is satisfied. The target object condition C1 is satisfied when a target vehicle 200 which is the target object is detected.

When the vehicle control apparatus 10 determines "No" at the step S305, the vehicle control apparatus 10 proceeds with the process directly to a step S395 to terminate the process of this routine once. On the other hand, when the vehicle control apparatus 10 determines "Yes" at the step S305, the vehicle control apparatus 10 proceeds with the process to a step S310 to determine whether or not an adjacent vehicle condition C2 is satisfied. The adjacent vehicle condition C2 is satisfied when the target vehicle 200 is a target existing in the adjacent lane LN2. In particular, in this embodiment, the adjacent vehicle condition C2 is satisfied when the target vehicle 200 is another vehicle traveling in the adjacent lane LN2. That is, the adjacent vehicle condition C2 is satisfied when the target vehicle 200 is another vehicle traveling in the adjacent lane LN2 in the same traveling direction as the traveling direction of the host vehicle 100.

When the vehicle control apparatus 10 determines "Yes" at the step S310, the vehicle control apparatus 10 proceeds with the process to a step S315 to determine whether or not a large-sized vehicle condition C3 is satisfied. The large-sized vehicle condition C3 is satisfied when a length of the target vehicle 200 in the traveling direction of the host vehicle 100 is equal to or greater than a predetermined length Lth. In particular, in this embodiment, the large-sized vehicle condition C3 is satisfied when the target vehicle 200 is a large-sized vehicle 205A. The large-sized vehicle 205A is a vehicle whose overall length L is equal to or greater than the predetermined length Lth. The overall length L is a length in a longitudinal direction of the vehicle. Therefore, the large-sized vehicle condition C3 is satisfied when a length (overall length L) of the adjacent vehicle 200A in the traveling direction of the host vehicle 100 is equal to or greater than the predetermined length Lth.

When the vehicle control apparatus 10 determines "Yes" at the step S315, the vehicle control apparatus 10 proceeds with the process to a step S320 to set a predetermined overlap ratio threshold LPth. At the step S320, a value (that is, a correction overlap threshold) obtained by adding a correction value dL to a reference overlap ratio threshold Lb is set as the predetermined overlap ratio threshold LPth (LPth = Lb + dL). Here, the correction value dL is a value greater than zero. Further, the correction value dL is set to be greater when the overall length L of the target vehicle 200 (that is, the large-sized vehicle 205A) is greater, as compared with when the overall length L of the target vehicle 200 is smaller. That is, the correction value dL is set stepwise to a greater value every time the overall length L of the target vehicle 200 increases by a predetermined length. In particular, the correction value dL is set to a greater value as the overall length L of the target vehicle 200 (that is, the large-sized vehicle 205A) is greater. However, the correction value dL may be set to a constant value regardless of the overall length L of the target vehicle 200. It should be noted that the predetermined overlap ratio threshold LPth is used at a step S330 described later.

It should be noted that the vehicle control apparatus 10 may be configured to set, at the step S320, a value obtained by subtracting a correction value dTTC from a reference predicted reach time TTCb as a predetermined predicted reach time TTCth (TTCth = TTCb - dTTC). Here, the correction value dTTC is greater than zero. Further, the correction value dTTC is set to be greater when the overall length L of the target vehicle 200 (that is, the large-sized vehicle 205A) is greater, as compared with when the overall length L of the target vehicle 200 (that is, the large-sized vehicle 205A) is smaller. That is, the correction value dTTC is set stepwise to a greater value every time the overall length L of the target vehicle 200 increases by a predetermined length. In particular, the correction value dTTC is set to a greater value as the overall length L of the target vehicle 200 is greater. However, the correction value dTTC may be set to a constant value regardless of the overall length L of the target vehicle 200. It should be noted that the predetermined predicted reach time TTCth is used at a step S330 described later.

As described above, the vehicle control apparatus 10 is configured to perform a change process to change a collision condition C4 such that the collision condition C4 is made difficult to be satisfied when the adjacent vehicle condition C2 (or a first condition) that the target vehicle 200 exists in the adjacent lane LN2 adjacent to the host vehicle traveling lane LN1 is satisfied, and the large-sized vehicle condition C3 (or a second condition) that a length (overall length L) of the target vehicle 200 in the traveling direction of the host vehicle 100 is equal to or greater than the predetermined length Lth is satisfied.

In other words, the vehicle control apparatus 10 is configured to perform a change process to change a threshold relating to a relative positional relationship such that the collision condition C4 is made difficult to be satisfied when the adjacent vehicle condition C2 (or the first condition) that the target vehicle 200 is another vehicle traveling in the adjacent lane LN2 adjacent to the host vehicle traveling lane LN1 in the same traveling direction as the traveling direction of the host vehicle 100 is satisfied, and the large-sized vehicle condition C3 (or the second condition) that a length (overall length L) of the target vehicle 200 in the traveling direction of the host vehicle 100 is equal to or greater than the predetermined length Lth is satisfied. Here, the relative positional relationship is a positional relative relationship between the target vehicle 200 ahead of the host vehicle 100 and the host vehicle 100, which is acquired from the image information IC acquired by the image sensor 61 mounted on the host vehicle 100.

Then, the above-mentioned change process is a process of increasing the predetermined overlap ratio threshold LPth. In particular, the above-mentioned change process is a process of increasing the predetermined overlap ratio threshold LPth as the length of the target vehicle 200 is longer.

Next, the vehicle control apparatus 10 proceeds with the process to a step S330 to determine whether or not a collision condition C4 is satisfied. The collision condition C4 is a condition based on a relative relationship (in particular, a relative positional relationship) between the target vehicle 200 ahead of the host vehicle 100 and the host vehicle 100, and is satisfied when there is a collision risk that the host vehicle 100 collides with the target vehicle 200. In this embodiment, the collision condition C4 is satisfied when an overlap ratio LP is equal to or greater than the predetermined overlap ratio threshold LPth and a predicted reach time TTC is equal to or less than the predetermined predicted reach time TTCth. In this way, the collision condition C4 includes at least a condition that the overlap ratio LP between the target vehicle 200 and the host vehicle 100 is equal to or greater than the predetermined overlap ratio threshold.

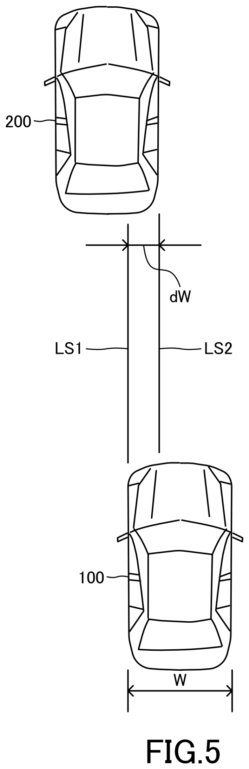

The overlap ratio LP is a parameter obtained by dividing an overlap length dW by an overall width W of the host vehicle 100 (LP = dW/W). As shown in FIG. 5, the overall width W of the host vehicle 100 is a length of the host vehicle 100 in a lateral direction of the host vehicle 100. Further, the overlap length dW is a length in which the host vehicle 100 and the target vehicle 200 (in particular, another vehicle) overlap in the lateral direction. That is, when the target vehicle 200 exists on the left side of the host vehicle 100, the overlap length dW is a length between a line LS2 extending in a longitudinal direction along a right side surface of the target vehicle 200 and a line LS1 extending in the longitudinal direction along a left side surface of the host vehicle 100.

Further, the predicted reach time TTC is a time predicted that the host vehicle 100 reaches the target vehicle 200. More specifically, the predicted reach time TTC is a parameter obtained by dividing a target inter-vehicle distance D by a target relative speed V12 (TTC = D/V12). The target inter-vehicle distance D is a distance between the host vehicle 100 and the target vehicle 200 in the longitudinal direction of the host vehicle 100. The target inter-vehicle distance D is acquired based on the surrounding information IS. Further, the target relative speed V12 is a relative velocity of the target vehicle 200 with respect to the host vehicle 100. In this embodiment, the target relative speed V12 is an absolute value of a velocity obtained by subtracting a host vehicle speed V1 from a traveling speed V2 of the target vehicle 200 (V12 = |V2 - V1|). It should be noted that, when the traveling speed V2 of the target vehicle 200 is equal to or greater than the host vehicle speed V1, an infinite value is acquired as the predicted reach time TTC. Further, the traveling speed V2 of the target vehicle 200 is acquired based on the surrounding information IS.

When the vehicle control apparatus 10 determines "No" at the step S330, the vehicle control apparatus 10 proceeds with the process directly to the step S395 to terminate the process of this routine once. On the other hand, when the vehicle control apparatus 10 determines "Yes" at the step S330, the vehicle control apparatus 10 proceeds with the process to a step S335 to execute the collision risk reduction control. Next, the vehicle control apparatus 10 proceeds with the process to the step S395 to terminate the process of this routine once.

In this way, when the collision condition C4 is satisfied, the vehicle control apparatus 10 executes the collision risk reduction control to reduce the collision risk.

Further, when the vehicle control apparatus 10 determines "No" at the step S315, the vehicle control apparatus 10 proceeds with the process to a step S325 to set the predetermined overlap ratio threshold LPth. At the step S325, the reference overlap ratio threshold Lb is set as the predetermined overlap ratio threshold LPth. Next, the vehicle control apparatus 10 proceeds with the process to the step S330 to determine whether or not the collision condition C4 is satisfied.

When the vehicle control apparatus 10 determines "No" at the step S330, the vehicle control apparatus 10 proceeds with the process directly to the step S395 to terminate the process of this routine once. On the other hand, when the vehicle control apparatus 10 determines "Yes" at the step S330, the vehicle control apparatus 10 proceeds with the process to the step S335 to execute the collision risk reduction control. Next, the vehicle control apparatus 10 proceeds with the process to the step S395 to terminate the process of this routine once.

Furthermore, when the vehicle control apparatus 10 determines "No" at the step S310, the vehicle control apparatus 10 proceeds with the process to the step S325 to set the predetermined overlap ratio threshold LPth. Next, the vehicle control apparatus 10 proceeds with the process to the step S330 to determine whether or not the collision condition C4 is satisfied.

When the vehicle control apparatus 10 determines "No" at the step S330, the vehicle control apparatus 10 proceeds with the process directly to the step S395 to terminate the process of this routine once. On the other hand, when the vehicle control apparatus 10 determines "Yes" at the step S330, the vehicle control apparatus 10 proceeds with the process to the step S335 to execute the collision risk reduction control. Next, the vehicle control apparatus 10 proceeds with the process to the step S395 to terminate the process of this routine once.

The above is the operation of the vehicle control apparatus 10.

When the host vehicle 100 overtakes the long large-sized vehicle 205A in the traveling direction of the host vehicle 100, accuracy of acquiring a relative relationship between the large-sized vehicle 205A and the host vehicle 100 may be reduced. In this case, although there is no collision risk that the host vehicle 100 collides with the large-sized vehicle 205A, it may be determined that the collision condition C4 is satisfied. In this case, the collision risk reduction control may be unnecessarily executed.

In particular, when a system is configured to acquire the relative relationship between the large-sized vehicle 205A and the host vehicle 100 based on a camera image, accuracy of acquiring the relative relationship between the large-sized vehicle 205A and the host vehicle 100 may be reduced. That is, when the system is configured to acquire the relative relationship between the large-sized vehicle 205A and the host vehicle 100 based on the camera image, the system performs processing to surround a region of the camera image in which the large-sized vehicle 205A is shown by a so-called bounding box. Then, the system grasps a position of the large-sized vehicle 205A by the bounding box. The bounding box gradually becomes smaller while the host vehicle 100 is overtaking the large-sized vehicle 205A. Here, time required for the host vehicle 100 to overtake the large-sized vehicle 205A is longer than time required for the host vehicle 100 to overtake an ordinary passenger vehicle. Therefore, the system may erroneously determine a phenomenon that the bounding box gradually becomes smaller while the host vehicle 100 is overtaking the large-sized vehicle 205A, as a phenomenon that the large-sized vehicle 205A has entered into the host vehicle traveling lane LN1. In this case, the collision risk reduction control may be unnecessarily executed.

According to the vehicle control apparatus 10, when the large-sized vehicle 205A is another vehicle existing in the adjacent lane LN2 adjacent to the host vehicle traveling lane LN1, and a length (overall length L) of the large-sized vehicle 205A in the traveling direction of the host vehicle 100 is equal to or greater than the predetermined length Lth, the collision condition C4 is made difficult to be satisfied. Therefore, in a situation where the host vehicle 100 overtakes the long large-sized vehicle 205A, unnecessary execution of the collision risk reduction control can be avoided.

It should be noted that the present invention is not limited to the above embodiment, and various modifications may be adopted within the scope of the present invention.

## Claims

1. A vehicle control apparatus (10) comprising an electronic control unit (90) configured to execute a collision risk reduction control to reduce a collision risk when a collision condition is satisfied,
the collision condition being a condition based on a relative relationship between a host vehicle (100) and a target object (200) ahead of the host vehicle (100) and being satisfied when there is a collision risk that the host vehicle (100) collides with the target object (200),
wherein the electronic control unit (90) is configured to perform a change process to change the collision condition such that the collision condition is made difficult to be satisfied when a first condition and a second condition are satisfied,
the first condition is a condition that the target object (200) exists in a lane adjacent to a lane in which the host vehicle (100) is traveling, and
the second condition is a condition that a length of the target object (200) in a traveling direction of the host vehicle (100) is equal to or greater than a predetermined length.

2. The vehicle control apparatus (10) according to claim 1,
wherein the collision condition includes a condition that an overlap ratio between the target object (200) and the host vehicle (100) is equal to or greater than a predetermined overlap ratio threshold, and
wherein the change process is a process of increasing the predetermined overlap ratio threshold.

3. The vehicle control apparatus according to claim 1,
wherein the collision condition includes a condition that an overlap ratio between the target object (200) and the host vehicle (100) is equal to or greater than a predetermined overlap ratio threshold, and
wherein the change process is a process of increasing the predetermined overlap ratio threshold as the length of the target object (200) is longer.

4. The vehicle control apparatus according to any one of claims 1 to 3, wherein the target object (200) is another vehicle (200A) traveling in a lane adjacent to the lane in which the host vehicle (100) is traveling in the same traveling direction as the traveling direction of the host vehicle (100).
